# EUROPÄISCHE PATENTSCHRIFT

(11) **EP 4 379 413 B1**
(45) Veröffentlichungstag und Bekanntmachung des Hinweises auf die Patenterteilung: **28.10.2026**
(21) Anmeldenummer: 23191595.0
(22) Anmeldetag: 16.08.2023
(51) Int. Cl.: G01S 7/02, F16P 3/14, G01S 13/42, G01S 13/87, G01S 13/88, H05K 9/00

(54) **SENSORANORDNUNG**
SENSOR ASSEMBLY
AGENCEMENT DE CAPTEURS

(30) Priorität: 30.11.2022 DE 202022106701 U
(43) Veröffentlichungstag der Anmeldung: 05.06.2024
(73) Patentinhaber: Leuze electronic GmbH + Co KG, 73277 Owen/Teck (DE)
(72) Erfinder: Eder, Alexander, 86928 Hofstetten (DE)
(74) Vertreter: Ruckh, Rainer Gerhard

(56) Entgegenhaltungen:
- EP-A1- 3 419 383
- EP-A1- 3 879 235
- EP-A1- 4 068 907
- EP-A2- 0 277 818
- CN-A- 111 665 399
- DE-U1- 202020 107 300

## Beschreibung

Die Erfindung betrifft eine Sensoranordnung.

Eine derartige Sensoranordnung umfasst wenigstens einen Radarstrahlen emittierenden Radarsensor, der in der Bearbeitungszelle angeordnet ist und dort für eine Objektüberwachung eingesetzt wird.

Dabei ist in der Bearbeitungszelle ein Arbeitsmittel vorgesehen, von welchem Gefahren für Personen ausgehen können. Beispielsweise ist die Bearbeitungszelle als Roboterzelle ausgebildet, in der als Arbeitsmittel ein Roboter vorhanden ist.

Mit dem Radarsensor wird geprüft, ob sich eine Person in der Bearbeitungszelle aufhält. Ist dies der Fall wird das Arbeitsmittel nicht freigegeben.

Die Bearbeitungszelle, die auf dem Boden einer Halle oder dergleichen steht, ist zumindest abschnittweise mit einem Gehäuse umhüllt, das aus einem Radarstrahlen blockierenden Material besteht. Dadurch wird verhindert, dass gefahrenbringende Radarstrahlen unkontrolliert aus der Bearbeitungszelle austreten. Typischerweise besteht das Gehäuse aus einem metallischen Werkstoff.

Ein Problem bei derartigen Sensoranordnungen besteht darin, dass oftmals das Gehäuse die Bearbeitungszelle nicht völlig dicht abschließt. Dann können Radarstrahlen aus der Bearbeitungszelle dringen, so dass eine Person oder ein Objekt außerhalb der Bearbeitungszelle mit dem Radarsensor detektiert wird, was zu einer fehlerhaften Generierung eines Objektfeststellungssignals und dadurch bedingt zu einer unnötigen Auslösung der Sicherheitsfunktion führt.

Um dann den Wiederanlauf des Arbeitsmittels durchführen zu können muss gewährleistet sein, dass sich keine Person in der Bearbeitungszelle aufhält. Um das festzustellen muss eine andere Person in die Bearbeitungszelle gehen, um dort zu kontrollieren, ob diese leer ist. Dies ist nicht nur umständlich, sondern auch gefährlich, wenn die weitere Person in die Bearbeitungszelle geht und der Radarsensor noch eingeschaltet ist.

Um eine visuelle Kontrolle der Bearbeitungszelle zu ermöglichen, ist es bekannt, eine Seite der Bearbeitungszelle offen zu lassen, d.h. in diesem Bereich das Gehäuse auszusparen. Die offene Seite wird dann mit einem optischen Sensor gesichert, da mit vom optischen Sensor emittierten Lichtstrahlen im Gegensatz zu einem Radarsensor die offene Seite der Bearbeitungszelle eng begrenzt in einer Fläche überwacht werden kann. Ein Problem hierbei besteht darin, dass dann die Radarstrahlen des Radarsensors über die offene Seite der Bearbeitungszelle nach außen dringen, wodurch Objekte und Personen außerhalb der Bearbeitungszelle erfasst werden, was zu fehlerhaften Generierungen von Objektfeststellungssignalen und zu unnötigen Auslösungen von Sicherheitsfunktionen führt.

Die EP 4 068 907 A1 betrifft einen Kochapparat mit einem eine transparente Scheibe aufweisenden Gehäuse. Der Kochapparat weist eine Heizvorrichtung mit einem Magnetron auf, mittels derer Speisen im Innenraum des Gehäuses erhitzt werden. Die Position der Speisen im Gehäuse kann mit einem Radarsensor überwacht werden.

Die EP 3 419 383 A1 betrifft einen Mikrowellenofen mit einem Gehäuse mit einem Sichtfenster, wobei sowohl das Gehäuse als auch das Sichtfenster nicht durchlässig sind für die Mikrowellenstrahlen, mit denen Speisen im Gehäuse erwärmt werden.

Die EP 0 277 818 A2 betrifft ein elektromagnetisches Schutzpanel, das elektromagnetische Strahlung im Bereich von 20 MHz bis 10.000 MHz schwächt.

Der Erfindung lieg die Aufgabe zugrunde eine Sensoranordnung der eingangs genannten Art bereitzustellen, welche bei konstruktiv einfachem Aufbau eine sichere Objektüberwachung gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Radarsensor in einer Bearbeitungszelle, deren Innenraum zumindest abschnittsweise von einem Gehäuse, bestehend aus Radarstrahlen blockierendem Material, umhüllt ist. Mit den vom Radarsensor emittierten Radarstrahlen wird eine Objektüberwachung in der Bearbeitungszelle durchgeführt. Im Gehäuse ist ein Sichtfenster bildendes Flächenelement vorhanden, das optisch transparent ist und das Radarstrahlen blockiert. Das Flächenelement bildet ein visuelles Kontrollmittel, wobei eine außerhalb der Bearbeitungszelle befindliche Bedienperson durch das Flächenelement optisch kontrolliert, ob in der Bearbeitungszelle eine Person vorhanden ist.

Bei der erfindungsgemäßen Sensoranordnung wird der Innenraum der Bearbeitungszelle mit wenigstens einem Radarsensor überwacht.

Vorteilhaft ist in der Bearbeitungszelle ein Arbeitsmittel vorhanden, wobei mit dem wenigstens einen Radarsensor ein Gefahrenbereich an dem Arbeitsmittel überwacht wird.

Insbesondere ist die Bearbeitungszelle eine Roboterzelle, in der als Arbeitsmittel ein Roboter vorhanden ist.

Vorteilhaft ist dabei der oder jeder Radarsensor als Sicherheitssensor ausgebildet, so dass die Sensoranordnung mit dem Radarsensor im Bereich der Sicherheitstechnik eingesetzt werden kann. Der als Sicherheitssensor ausgebildete Radarsensor weist hierzu einen fehlersicheren Aufbau auf, wobei insbesondere zur Signalauswertung redundante, insbesondere mehrkanalige Rechnerstrukturen vorhanden sind.

Die Überwachungsfunktion wird vorteilhaft derart realisiert, dass bei Erfassung eines Objekts im Gefahrenbereich mittels des Radarsensors eine Sicherheitsfunktion ausgelöst wird.

Durch Auslösen der Sicherheitsfunktion wird das Arbeitsmittel generell in einen sicheren Zustand überführt, in welchem vom Arbeitsmittel keine Gefahren für Personen mehr ausgehen können.

Insbesondere wird durch Auslösen der Sicherheitsfunktion das Arbeitsmittel stillgesetzt.

Alternativ ist die Überwachungsfunktion derart ausgebildet, dass mit dem Radarsensor geprüft wird, ob sich eine Person in der Bearbeitungszelle aufhält oder nicht. Das Arbeitsmittel wird nur dann freigegen, d.h. in Betrieb gesetzt, wenn keine Person in der Bearbeitungszelle detektiert wird.

Generell weist der oder jeder Radarsensor einen Radarstrahlen emittierenden Sender, einen Radarstrahlen empfangenden Empfänger und eine Auswerteeinheit auf, in der abhängig von Empfangssignalen des Empfängers ein Objektfeststellungssignal generiert wird.

Bei der Überwachung des Gefahrenbereichs in der Bearbeitungszelle generiert der Radarsensor bei Registrieren eines Objekteingriffs im Gefahrenbereich ein Objektfeststellungssignals derart, dass dieser zur Auslösung der Sicherheitsfunktion führt.

Der Innenraum der Bearbeitungszelle ist mit einem Gehäuse ummantelt, das aus einem Radarstrahlen blockierenden Material besteht. Damit wird eine Schutzfunktion derart bereitgestellt, dass Radarstrahlen der Radarsensoren nicht aus der Bearbeitungszelle nach außen dringen können, was einerseits zu einer Gefährdung von Personen außerhalb der Bearbeitungszelle führen könnte und andererseits zu Fehlfunktionen bei der Objektüberwachung mit dem Radarsensor führen könnte, da durch eine Erfassung eines Objekts außerhalb der Bearbeitungszelle ein Objekteingriff in der Bearbeitungszelle vorgetäuscht werden kann.

Um eine vollständige Schutzfunktion zu gewährleisten, umhüllt das Gehäuse die Bearbeitungszelle vollständig, d.h. an allen Seitenwänden und der Decke des Gehäuses der auf einem Boden einer Halle oder dergleichen stehenden Bearbeitungszelle.

Prinzipiell ist es auch möglich, dass im Gehäuse eine Öffnung vorhanden ist, über welche ein Materialtransport in die oder aus der Bearbeitungszelle erfolgt.

Erfindungsgemäß ist im Gehäuse der Bearbeitungszelle ein Flächenelement integriert, das ein Sichtfenster bildet. Hierzu ist das Flächenelement optisch transparent ausgebildet. Zudem besteht das Flächenelement aus einem Radarstrahlen blockierenden Material.

Das Flächenelement, das beispielsweise in eine Aussparung des Gehäuses eingesetzt ist, beeinträchtigt somit nicht die Radarstrahlen blockierende Wirkung des Gehäuses, da auch über das Flächenelement keine Radarstrahlen austreten können. Das Gehäuse selbst besteht vorteilhaft aus einem metallischen Werkstoff.

Vorteilhaft werden am Gehäuse reflektierte Radarstrahlen zur Objektdetektion genutzt. Dadurch wird eine noch weiter verbesserte Objektdetektion ermöglicht.

Gleichzeitig bildet das Flächenelement ein Sichtfenster durch welche eine Person außerhalb der Bearbeitungszelle den Innenraum der Bearbeitungszelle einsehen kann. Dabei kann die Person erkennen, ob sich eine andere Person im Innenraum der Bearbeitungszelle aufhält, ohne selbst in die Bearbeitungszelle gehen zu müssen. Dadurch wird eine zusätzliche Schutzfunktion für die Sensoranordnung bereitgestellt.

Das Flächenelement bildet somit ein visuelles Kontrollmittel mit dem die Sicherheit der gesamten Sensoranordnung erhöht wird. Insbesondere kann die Schutzfunktion der Sensoranordnung dadurch verbessert werden, dass Fehlfunktionen des Radarsensors aufgedeckt werden können und zudem auch Manipulationen bei der Benutzung der Bearbeitungszelle aufgedeckt werden können.

Dringt bei Vorhandensein undichter Stellen im Gehäuse ein Teil der Radarstrahlen des Radarsensors nach außen und wird damit ein Objekt oder eine Person außerhalb der Bearbeitungszelle detektiert und fehlerhaft ein Objektfeststellungssignal generiert, das ein Objekt im Innenraum der Bearbeitungszelle vortäuscht, so kann dieser Fehler dadurch aufgedeckt werden, dass eine Person außerhalb der Bearbeitungszelle durch das Flächenelement eine optische Kontrolle vornimmt und visuell prüft, ob ein Objekt oder eine Person im Innenraum der Bearbeitungszelle vorhanden ist.

Mit dem erfindungsgemäßen Flächenelement als Sichtfenster wird bei vollständig geschlossenem Gehäuse eine optische Kontrolle den Innenraum durch eine außerhalb der Bearbeitungszelle befindliche Person ermöglicht. Dies stellt eine wesentliche Verbesserung gegenüber bekannten Systemen dar, bei welchen ein Ausschnitt, insbesondere eine Seitenfläche des Gehäuses ausgespart ist, so dass dort eine Öffnung entsteht, durch welche der Innenraum einsehbar ist. Der Aufwand zur Überwachung der Öffnung mittels eines optischen Sensors ist bei der erfindungsgemäßen Sensoranordnung nicht erforderlich. Zudem treten die Radarstrahlen durch die Öffnung ungehindert hindurch, wodurch Fehldetektionen ermöglicht sind. Auch dieser Nachteil ist bei der erfindungsgemäßen Sensoranordnung beseitigt.

Wird nach Auslösen einer Sicherheitsfunktion durch den Radarsensor das Arbeitsmittel stillgesetzt, muss für das Arbeitsmittel ein Wiederanlauf durchgeführt werden, damit das Arbeitsmittel wieder seinen Betrieb aufnehmen kann. Eine wesentliche Voraussetzung für einen Wiederanlauf besteht darin, dass dabei keine Gefährdungen für Personen auftreten können.

Dies wird vorteilhaft dadurch erreicht, dass ein Wiederanlauf des Arbeitsmittels nur dann freigegeben wird, wenn eine außerhalb der Bearbeitungszelle befindliche Bedienperson bei einer optischen Kontrolle durch das Flächenelement feststellt, dass keine Person in der Bearbeitungszelle vorhanden ist.

Gemäß einer vorteilhaften Ausführungsform weist das Flächenelement als Mittel zur Blockierung von Radarstrahlen eine optisch transparente Metallschicht auf.

Dabei ist vorteilhaft, dass die Metallschicht eine Beschichtung auf einem optisch transparent Grundkörper des Flächenelements ist.

Der transparente Grundkörper kann dabei eine Glasscheibe, eine Kunststoffscheibe oder auch eine insbesondere aus Kunststoff bestehende Folie sein.

Im einfachsten Fall ist in der Bearbeitungszelle nur ein Radarsensor vorhanden.

In diesem Fall kann der Radarsensor als scannender Radarsensor ausgebildet sein, so dass mit diesem der gesamte Innenraum der Bearbeitungszelle überwacht werden kann.

Generell ist es auch möglich, dass in der Bearbeitungszelle mehrere Radarsensoren vorhanden sind, die Radarstrahlen in einer festen, unveränderlichen Richtung emittieren.

Die Erfindung wird im Folgenden anhand der Zeichnungen erläutert. Es zeigt:
- Figur 1:: Schematische Darstellung eines Ausführungsbeispiels der erfindungsgemäßen Sensoranordnung.
- Figur 2:: Schematische Darstellung eines Radarsensors für eine Sensoranordnung gemäß Figur 1.
- Figur 3:: Schematische Darstellung eines Ausführungsbeispiels des erfindungsgemäßen Flächenelements für die Sensoranordnung gemäß Figur 1.

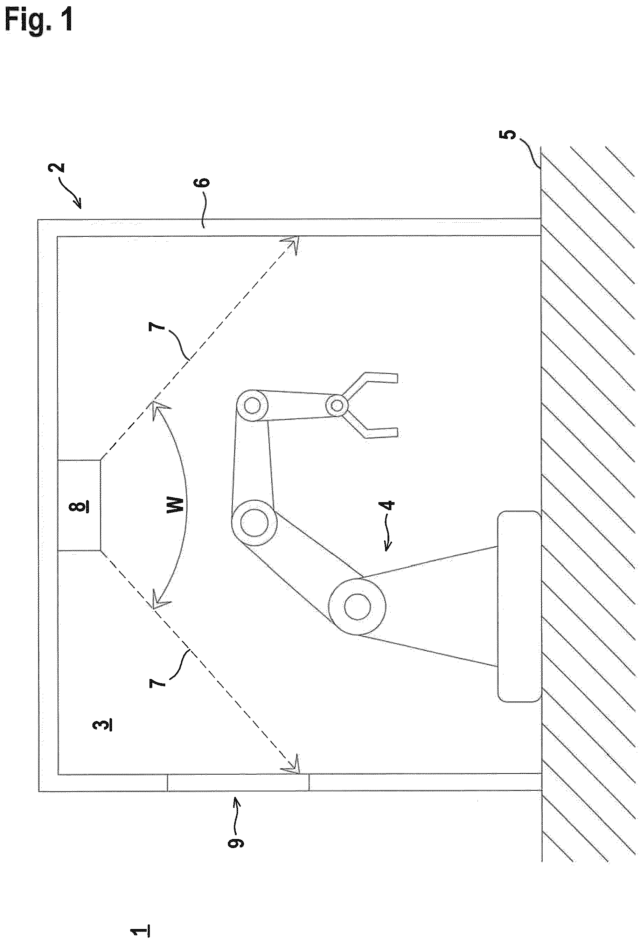

Figur 1 zeigt schematisch ein Ausführungsbeispiel der erfindungsgemäßen Sensoranordnung 1 zur Überwachung einer Bearbeitungszelle 2. Die Bearbeitungszelle 2 ist im vorliegenden Fall als Roboterzelle ausgebildet. Im Innenraum 3 der Bearbeitungszelle 2 befindet sich ein Arbeitsmittel in Form eines Roboters 4.

Der Innenraum 3 der auf einem Boden 5 einer Halle oder dergleichen stehenden Bearbeitungszelle 2 ist mit einem Gehäuse 6 vollständig gekapselt, d.h. die Seitenflächen und die Oberseite der Bearbeitungszelle 2 sind durch das Gehäuse 6 vollständig abgeschlossen.

Im Innenraum 3 der Bearbeitungszelle 2 befindet sich ein Radarstrahlen 7 emittierender Radarsensor 8 mit dem der Innenraum 3 der Bearbeitungszelle 2 überwacht wird. Der Radarsensor 8 ist im vorliegenden Fall an der Innenseite der Decke des Gehäuses 6 montiert. Der Radarsensor 8 emittiert Radarstrahlen 7 derart, dass mit diesem vorteilhaft der gesamte Innenraum 3, zumindest die Umgebung des Roboters 4 erfasst wird. Damit keine Radarstrahlen 7 aus dem Innenraum 3 dringen, besteht das Gehäuse 6 aus einem Radarstrahlen 7 blockierenden Material, insbesondere aus einem metallischen Werkstoff.

In einer Seitenwand des Gehäuses 6 befindet sich ein Flächenelement 9, das ein Sichtfenster bildet. Das Flächenelement 9 kann in einer Aussparung einer Gehäusewand montiert sein. Während das Gehäuse 6 aus optisch nicht transparentem Material besteht, besteht das Flächenelement 9 aus optisch transparentem Material und bildet dadurch ein Sichtfenster durch welches eine Person außerhalb der Bearbeitungszelle 2 den Innenraum 3 der Bearbeitungszelle 2 einsehen kann. Anordnung und Größe des Flächenelements 9 sind hierzu entsprechend angepasst.

Erfindungsgemäß blockiert das Flächenelement 9 über seine gesamte Fläche Radarstrahlen 7, so dass es mit dem Gehäuse 6 eine vollständig, geschlossene, Radarstrahlen 7 blockierende, Umhüllung bildet.

Vorteilhaft werden am Gehäuse 6 und dem Sichtfenster reflektierte Radarstrahlen 7 zusätzlich zur Objektdetektion genutzt, wodurch die Nachweisempfindlichkeit erhöht wird.

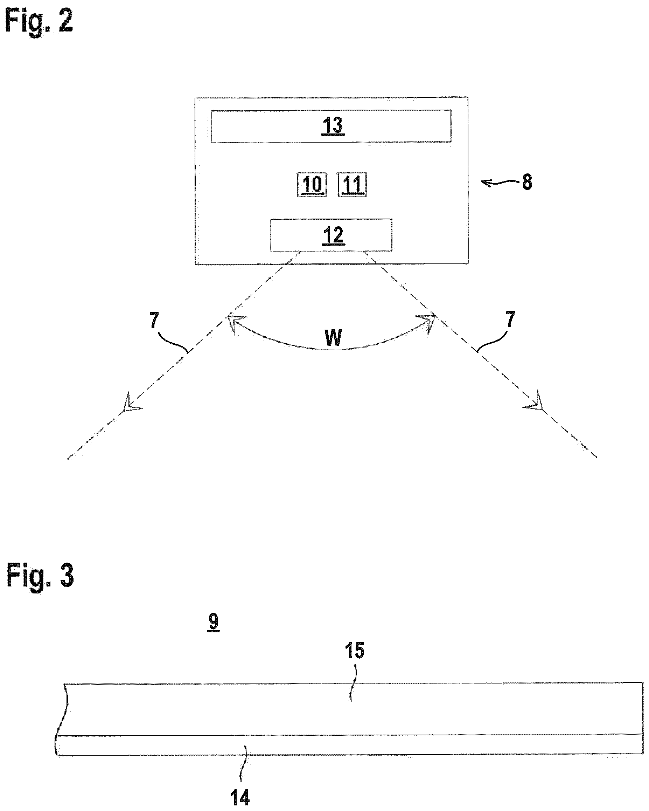

Der Radarsensor 8 ist im vorliegenden Fall, wie Figur 2 zeigt, ein scannender Sensor. Der Radarsensor 8 weist dementsprechend einen Radarstrahlen 7 emittierenden Sender 10 und einen Radarstrahlen 7 empfangenden Empfänger 11 auf. Zudem ist eine Ablenkeinheit 12 vorgesehen, mittels derer die Radarstrahlen 7 periodisch innerhalb eines Winkelbereichs W abgelenkt werden. Dadurch erfassen die Radarstrahlen 7 im Wesentlichen den gesamten Innenraum 3 der Bearbeitungszelle 2. Weiterhin weist der Radarsensor 8 eine Auswerteeinheit 13 zur Auswertung von Empfangssignalen des Empfängers 11 auf.

Anstelle eines scannenden Radarsensors 8 kann auch eine Anordnung mit mehreren Radarsensoren 8 vorgesehen sein, die Radarsensoren 8 in nur eine fest vorgegebene Raumrichtung emittieren. Auch damit kann der gesamte Innenraum 3 der Bearbeitungszelle 2 überwacht werden. In diesem Fall können die Radarsensoren 8 an eine gemeinsame Auswerteeinheit 13 angeschlossen sein.

Figur 3 zeigt schematisch den Aufbau des Flächenelements 9. Das Flächenelement 9 weist als Mittel zur Blockierung von Radarstrahlen 7 eine Metallschicht 14 auf, die auf einem optisch transparentem Grundkörper 15 aufgebracht ist.

Der Grundkörper 15 besteht im vorliegenden Fall aus einer Glasplatte. Generell kann der Grundkörper 15 auch eine Kunststoffplatte oder eine Folie, insbesondere bestehend aus Kunststoff, sein.

Die Metallschicht 14 ist auch optisch transparent und weist eine dementsprechend geringe Schichtdicke auf. Die Metallschicht 14 kann durch Aufdampfen oder sonstige Beschichtungsprozesse auf dem Grundkörper 15 aufgebracht werden.

Für den Einsatz im Bereich der Sicherheitstechnik ist der Radarsensor 8 als Sicherheitssensor ausgebildet. Der Sicherheitssensor weist einen fehlersicheren Aufbau auf, der insbesondere dadurch erzielt wird, dass die Auswerteeinheit 13 aus einer mehrkanaligen Rechnerstruktur besteht.

Die Funktionsweise der Sensoranordnung 1 ist derart, dass mit dem Radarsensor 8 ein Gefahrenbereich im Umfeld des Roboters 4 überwacht wird, wobei der Gefahrenbereich von einem Teilbereich des Innenraums 3 der Bearbeitungszelle 2 gebildet ist. Der Gefahrenbereich kann je nach Art der vom Roboter 4 durchgeführten Arbeitsbewegungen veränderlich ausgebildet sein.

In der Auswerteeinheit 13 wird abhängig der Empfangssignale des Empfängers 11 ein Objektfeststellungssignal generiert. Bei der durchgeführten Gefahrenbereich-Überwachung generiert die Auswerteeinheit 13 als Objektfeststellungssignal ein binäres Schaltsignal, dessen Schaltzustände angeben, ob sich ein Objekt im Gefahrenbereich befindet oder nicht. Wird mit dem Radarsensor 8 ein Objekt im Gefahrenbereich detektiert, führt das entsprechende Schaltsignal zur Auslösung einer Sicherheitsfunktion, die den Roboter 4 in einen sicheren Zustand überführt. Insbesondere wird der Roboter 4 stillgesetzt. Die Auslösung der Sicherheitsfunktion erfolgt derart, dass der Radarsensor 8 ein Schaltsignal an die Steuerung des Roboters 4 überträgt.

Vorteilhaft kann der Roboter 4 wieder in Betrieb gesetzt werden, wenn für einen vorgegebenen Zeitraum, der vorteilhaft im Bereich von 4 bis 10 s liegt, keine Bewegung im Gefahrenbereich mittels des Radarsensors 8 festgestellt wird. Durch das Sichtfenster kann eine Bedienperson zusätzlich kontrollieren, ob sich eine Person in der Bearbeitungszelle 2 aufhält.

Generell bildet das Flächenelement 9 ein visuelles Kontrollmittel.

Insbesondere kann eine außerhalb der Bearbeitungszelle 2 befindliche Bedienperson durch das Flächenelement 9 optisch kontrollieren, ob in der Bearbeitungszelle 2 eine Person vorhanden ist.

Damit kann mit dem Flächenelement 9, insbesondere ein kontrollierter Wiederanlauf des Arbeitsmittels, insbesondere des Roboters 4 durchgeführt werden, nachdem dieses nach Auslösen der Sicherheitsfunktion stillgesetzt wurde.

Dabei wird ein Wiederanlauf des Arbeitsmittels nur dann freigegeben, wenn eine außerhalb der Bearbeitungszelle 2 befindliche Bedienperson bei einer optischen Kontrolle durch das Flächenelement 9 feststellt, dass keine Person in der Bearbeitungszelle 2 vorhanden ist.

Auch können mit dem Flächenelement 9 als optischem Kontrollmittel Fehlfunktionen der Sensoranordnung 1 aufgedeckt werden. Bei Fehlern im Aufbau des Gehäuses 6 kann ein Teil der Radarstrahlen 7 durch das Gehäuse 6 aus dem Innenraum 3 der Bearbeitungszelle 2 nach außen dringen. Dann kann ein Objekt oder eine Person außerhalb der Bearbeitungszelle 2 erkannt werden, was zu einer fehlerhaften Generierung des Objektfeststellungssignals führen kann. Diese Fehlfunktion kann durch eine visuelle Kontrolle derart, dass eine Person durch das Flächenelement 9 kontrolliert, ob sich eine Person im Innenraum 3 der Bearbeitungszelle 2 aufhält, aufgedeckt werden.

### Bezugszeichenliste

- (1): Sensoranordnung
- (2): Bearbeitungszelle
- (3): Innenraum
- (4): Roboter
- (5): Boden
- (6): Gehäuse
- (7): Radarstrahl
- (8): Radarsensor
- (9): Flächenelement
- (10): Sender
- (11): Empfänger
- (12): Ablenkeinheit
- (13): Auswerteeinheit
- (14): Metallschicht
- (15): Grundkörper

- (W): Winkelbereich

## Patentansprüche

1. Sensoranordnung (1) mit einer Bearbeitungszelle (2) und wenigstens einem Radarsensor (8) in der Bearbeitungszelle (2), deren Innenraum (3) zumindest abschnittsweise von einem Gehäuse (6) bestehend aus Radarstrahlen (7) blockierendem Material umhüllt ist, wobei der Radarsensor (8) dazu ausgebildet ist, mit emittierten Radarstrahlen (7) eine Objektüberwachung in der Bearbeitungszelle (2) durchzuführen, wobei im Gehäuse (6) ein ein Sichtfenster bildendes Flächenelement (9) vorhanden ist, das optisch transparent ist und das Radarstrahlen (7) blockiert, wobei das Flächenelement (9) ein visuelles Kontrollmittel bildet und wobei das Flächenelement (9) dazu ausgebildet ist, einer außerhalb der Bearbeitungszelle (2) befindliche Bedienperson eine optische Kontrolle, ob in der Bearbeitungszelle (2) eine Person vorhanden ist, zu ermöglichen.

2. Sensoranordnung (1) nach Anspruch 1, **dadurch gekennzeichnet, dass** das Flächenelement (9) als Mittel zur Blockierung von Radarstrahlen (7) eine optisch transparente Metallschicht (14) aufweist.

3. Sensoranordnung (1) nach Anspruch 2, **dadurch gekennzeichnet, dass** die Metallschicht (14) eine Beschichtung auf einem optisch transparenten Grundkörper (15) des Flächenelements (9) ist.

4. Sensoranordnung (1) nach Anspruch 3, **dadurch gekennzeichnet, dass** der transparente Grundkörper (15) eine Glasscheibe oder eine Kunststoffscheibe oder eine Folie ist.

5. Sensoranordnung (1) nach einem der Ansprüche 1 bis 4, **dadurch gekennzeichnet, dass** in der Bearbeitungszelle (2) ein scannender Radarsensor (8) vorhanden ist, oder dass in der Bearbeitungszelle (2) mehrere Radarsensoren (8) vorhanden sind, die Radarstrahlen (7) in einer festen, unveränderlichen Richtung emittieren.

6. Sensoranordnung (1) nach einem der Ansprüche 1 bis 5, **dadurch gekennzeichnet, dass** der oder jeder Radarsensor (8) einen Radarstrahlen (7) emittierenden Sender (10), einen Radarstrahlen (7) empfangenden Empfänger (11) und eine Auswerteeinheit (13), in der abhängig von Empfangssignalen des Empfängers (11) ein Objektfeststellungssignal generiert wird, aufweist.

7. Sensoranordnung (1) nach einem der Ansprüche 1 bis 6, **dadurch gekennzeichnet, dass** in der Bearbeitungszelle (2) ein Arbeitsmittel vorhanden ist, wobei mit dem wenigstens einen Radarsensor (8) ein Gefahrenbereich an dem Arbeitsmittel überwacht wird.

8. Sensoranordnung (1) nach einem der Ansprüche 1 bis 7, **dadurch gekennzeichnet, dass** die Bearbeitungszelle (2) eine Roboterzelle ist, in der als Arbeitsmittel ein Roboter (4) vorhanden ist.

9. Sensoranordnung (1) nach einem der Ansprüche 7 oder 8, **dadurch gekennzeichnet, dass** bei Erfassung eines Objekts im Gefahrenbereich mittels des Radarsensors (8) eine Sicherheitsfunktion ausgelöst wird, wobei durch Auslösen der Sicherheitsfunktion insbesondere das Arbeitsmittel stillgesetzt wird, und/oder dass mit dem Radarsensor (8) geprüft wird, ob sich eine Person in der Bearbeitungszelle (2) befindet, und dass das Arbeitsmittel nur dann freigegeben wird, wenn keine Person in der Bearbeitungszelle (2) vorhanden ist.

10. Sensoranordnung (1) nach einem der Ansprüche 7 bis 9, **dadurch gekennzeichnet, dass** ein Wiederanlauf des Arbeitsmittels nur dann freigegeben wird, wenn eine außerhalb der Bearbeitungszelle (2) befindliche Bedienperson bei einer optischen Kontrolle durch das Flächenelement (9) feststellt, dass keine Person in der Bearbeitungszelle (2) vorhanden ist.

11. Sensoranordnung (1) nach einem der Ansprüche 1 bis 10, **dadurch gekennzeichnet, dass** das Gehäuse (6) aus einem metallischen Werkstoff besteht.

12. Sensoranordnung (1) nach einem der Ansprüche 1 bis 11, **dadurch gekennzeichnet, dass** am Gehäuse (6) reflektierte Radarstrahlen (7) zur Objektdetektion genutzt werden.

13. Sensoranordnung (1) nach einem der Ansprüche 1 bis 12, **dadurch gekennzeichnet, dass** das Gehäuse (6) die Bearbeitungszelle (2) vollständig umhüllt, oder dass im Gehäuse (6) eine Öffnung vorhanden ist, über welche ein Materialtransport in die oder aus der Bearbeitungszelle (2) erfolgt.

14. Sensoranordnung (1) nach einem der Ansprüche 1 bis 13, **dadurch gekennzeichnet, dass** der oder jeder Radarsensor (8) ein Sicherheitssensor ist.

## Claims

1. Sensor assembly (1) comprising a processing cell (2) and at least one radar sensor (8) in the processing cell (2), the interior (3) of which is enclosed, at least in sections, by a housing (6) made of material that blocks radar beams (7),
wherein the radar sensor (8) is designed to monitor objects within the processing cell (2) by means of emitted radar beams (7),
wherein the housing (6) contains a surface element (9) forming a viewing window, which is optically transparent and blocks the radar beams (7), wherein the surface element (9) forms a visual monitoring means, and wherein the flat element (9) is designed to enable an operator located outside the processing cell (2) to visually check whether a person is present in the processing cell (2).

2. Sensor assembly (1) according to claim 1, **characterised in that** the panel (9) comprises an optically transparent metal layer (14) as a means for blocking radar beams (7).

3. Sensor assembly (1) according to claim 2, **characterised in that** the metal layer (14) is a coating on an optically transparent base body (15) of the surface element (9).

4. Sensor assembly (1) according to claim 3, **characterised in that** the transparent substrate (15) is a glass pane, a plastic pane or a film.

5. A sensor assembly (1) according to any one of claims 1 to 4, **characterised in that** a scanning radar sensor (8) is present in the processing cell (2), or that a plurality of radar sensors (8) are present in the processing cell (2), which emit radar beams (7) in a fixed, unchanging direction.

6. Sensor assembly (1) according to any one of claims 1 to 5, **characterised in that** the or each radar sensor (8) comprises a transmitter (10) emitting a radar beam (7), a receiver (11) for receiving radar beams (7), and an evaluation unit (13) in which an object detection signal is generated depending on the received signals from the receiver (11).

7. Sensor assembly (1) according to any one of claims 1 to 6, **characterised in that** a work tool is present in the processing cell (2), wherein a danger zone on the work tool is monitored by the at least one radar sensor (8).

8. Sensor assembly (1) according to any one of claims 1 to 7, **characterised in that** the processing cell (2) is a robot cell in which a robot (4) is present as the working device.

9. Sensor assembly (1) according to any one of claims 7 or 8, **characterised in that**, upon detection of an object in the danger zone by means of the radar sensor (8), a safety function is triggered, whereby triggering the safety function in particular brings the work equipment to a standstill, and/or that the radar sensor (8) is used to check whether a person is present in the processing cell (2), and that the working equipment is only authorised to operate if no person is present in the processing cell (2).

10. Sensor assembly (1) according to any one of claims 7 to 9, **characterised in that** restarting of the piece of work equipment is authorised only if an operator located outside the processing cell (2) determines, during a visual inspection via the surface element (9), that no person is present in the processing cell (2).

11. Sensor assembly (1) according to any one of claims 1 to 10, **characterised in that** the housing (6) is made of a metallic material.

12. Sensor assembly (1) according to any one of claims 1 to 11, **characterised in that** radar beams (7) reflected from the housing (6) are used for object detection

13. A sensor assembly (1) according to any one of claims 1 to 12, **characterised in that** the housing (6) completely encloses the processing cell (2), or **in that** there is an opening in the housing (6) through which material is transported into or out of the processing cell (2).

14. A sensor assembly (1) according to any one of claims 1 to 13, **characterised in that** the or each radar sensor (8) is a safety sensor.

## Revendications

1. Agencement de capteurs (1) comprenant une cellule de traitement (2) et au moins un capteur radar (8) dans la cellule de traitement (2), dont l'espace intérieur (3) est enveloppé, au moins par sections, par un boîtier (6) constitué d'un matériau bloquant les faisceaux radar (7),
le capteur radar (8) étant conçu pour effectuer une surveillance d'objets dans la cellule de traitement (2) à l'aide de faisceaux radar (7) émis,
un élément plat (9) formant une fenêtre d'observation étant présent dans le boîtier (6), lequel élément est optiquement transparent et bloque les faisceaux radar (7), l'élément plat (9) constituant un moyen de contrôle visuel et l'élément plat (9) étant conçu pour permettre à un opérateur se trouvant à l'extérieur de la cellule de traitement (2) de vérifier visuellement si une personne se trouve dans la cellule de traitement (2).

2. Agencement de capteurs (1) selon la revendication 1, **caractérisé en ce que** l'élément plat (9) comporte, en tant que moyen de blocage des faisceaux radar (7), une couche métallique (14) optiquement transparente.

3. Agencement de capteurs (1) selon la revendication 2, **caractérisé en ce que** la couche métallique (14) est un revêtement appliqué sur un corps de base (15) optiquement transparent de l'élément plat (9).

4. Agencement de capteurs (1) selon la revendication 3, **caractérisé en ce que** le corps de base transparent (15) est une vitre en verre, une vitre en plastique ou un film.

5. Agencement de capteurs (1) selon l'une des revendications 1 à 4, **caractérisé en ce que** la cellule de traitement (2) comporte un capteur radar à balayage (8), ou **en ce que** la cellule de traitement (2) comporte plusieurs capteurs radar (8) qui émettent des faisceaux radar (7) dans une direction fixe et invariable.

6. Agencement de capteurs (1) selon l'une des revendications 1 à 5, **caractérisé en ce que** le ou chaque capteur radar (8) comprend un émetteur (10) émettant des faisceaux radar (7), un récepteur (11) recevant des faisceaux radar (7) et une unité d'évaluation (13) dans laquelle un signal de capteur d'objet est généré en fonction des signaux de réception du récepteur (11).

7. Agencement de capteurs (1) selon l'une des revendications 1 à 6, **caractérisé en ce qu'**un outil de travail est présent dans la cellule de traitement (2), une zone de danger au niveau de l'outil de travail étant surveillée à l'aide dudit au moins un capteur radar (8).

8. Agencement de capteurs (1) selon l'une des revendications 1 à 7, **caractérisé en ce que** la cellule de traitement (2) est une cellule robotisée dans laquelle un robot (4) est présent en tant qu'outil de travail.

9. Agencement de capteurs (1) selon l'une des revendications 7 ou 8, **caractérisé en ce que**, lorsqu'un objet est détecté dans la zone de danger au moyen du capteur radar (8), une fonction de sécurité est déclenchée, le déclenchement de la fonction de sécurité entraînant notamment l'arrêt de l'outil de travail, et/ou que le capteur radar (8) permet de vérifier si une personne se trouve dans la cellule de traitement (2), et que l'outil de travail n'est autorisé à redémarrer que s'il n'y a personne dans la cellule de traitement (2).

10. Agencement de capteurs (1) selon l'une des revendications 7 à 9, **caractérisé en ce que** le redémarrage de l'équipement de travail n'est autorisé que si un opérateur se trouvant à l'extérieur de la cellule de traitement (2) constate, lors d'un contrôle visuel à l'aide de l'élément de surface (9), qu'aucune personne ne se trouve dans la cellule de traitement (2).

11. Agencement de capteurs (1) selon l'une des revendications 1 à 10, **caractérisé en ce que** le boîtier (6) est constitué d'un matériau métallique.

12. Agencement de capteurs (1) selon l'une des revendications 1 à 11, **caractérisé en ce que** des faisceaux radar (7) réfléchis par le boîtier (6) sont utilisés pour la détection d'objets

13. Agencement de capteurs (1) selon l'une des revendications 1 à 12, **caractérisé en ce que** le boîtier (6) enveloppe entièrement la cellule de traitement (2), ou **en ce qu'**une ouverture est prévue dans le boîtier (6), par laquelle s'effectue un transport de matière vers ou depuis la cellule de traitement (2).

14. Agencement de capteurs (1) selon l'une des revendications 1 à 13, **caractérisé en ce que** le ou chaque capteur radar (8) est un capteur de sécurité.
